# EUROPEAN PATENT SPECIFICATION

(11) **EP 0 939 910 B1**
(45) Date of publication and mention of the grant of the patent: **26.07.2000**
(21) Application number: 97950296.0
(22) Date of filing: 19.12.1997
(51) Int. Cl.: G01V 1/38

(54) **CONTROL DEVICES FOR CONTROLLING THE POSITION OF A MARINE SEISMIC STREAMER**
STEUERGERÄTE ZUR POSITIONSSTEUERUNG EINES MEERESSEISMISCHES MESSKABELs
DISPOSITIFS DE COMMANDE DE LA POSITION D'UNE FLUTE SISMIQUE MARINE

(30) Priority: 20.12.1996 GB 9626442
(43) Date of publication of application: 08.09.1999
(73) Proprietor: SCHLUMBERGER HOLDINGS LIMITED, Road Town, Tortola (VG); SERVICES PETROLIERS SCHLUMBERGER, F-75007 Paris (FR)
(72) Inventor: BITTLESTON, Simon, Hastings, N-1312 Slependen (NO)
(74) Representative: Stoole, Brian David
(86) International application number: GB9703507
(87) International publication number: WO9828636

(56) References cited:
- EP-A- 0 193 215
- WO-A-97/30361
- US-A- 3 774 570
- US-A- 4 745 583
- US-A- 5 443 027
- US-A- 5 619 474

## Description

This invention relates to control devices for controlling the position of a marine seismic streamer.

A marine seismic streamer is an elongate cable-like structure, typically up to several thousand metres long, which contains arrays of hydrophones and associated electronic equipment along its length, and which is used in marine seismic surveying. In order to perform a 3D marine seismic survey, a plurality of such streamers are towed at about 5 knots behind a seismic survey vessel, which also tows one or more seismic sources, typically air guns. Acoustic signals produced by the seismic sources are directed down through the water into the earth beneath, where they are reflected from the various strata. The reflected signals are received by the hydrophones, and then digitised and processed to build up a representation of the earth strata in the area being surveyed.

The streamers are typically towed at a constant depth of about ten metres, in order to facilitate the removal of undesired "ghost" reflections from the surface of the water. To keep the streamers at this constant depth, control devices known as "birds", attached to each streamer at intervals of 200 to 300 metres, are used.

Current designs of birds are battery-powered, and comprise a relatively heavy body which is suspended beneath the streamer, and which has a pair of laterally projecting wings (hence the name "bird"), one on each side. The combination of streamer and birds is arranged to be neutrally buoyant, and the angle of attack of both wings is adjusted in unison from time to time to control the depth of the streamer. Such a bird is disclosed in EP-A-0 193 215 (Laitram Corp).

Birds in accordance with these current designs suffer from a number of disadvantages. Because they are battery-powered, the batteries can run out before the survey is completed. necessitating either retrieval of the streamer for battery replacement, or deployment of a work boat to replace the battery in the water. The former operation is very time consuming, while the latter can be hazardous. Further, because the birds hang beneath the streamer, they produce considerable noise as they are towed through the water, which noise interferes with the reflected signals detected by the hydrophones in the streamers. The hanging of the birds from the streamers also means that the birds need to be detached each time the streamer is retrieved and re-attached each time it is re-deployed, which is again rather time consuming.

During the seismic survey, the streamers are intended to remain straight, parallel to each other and equally spaced. However, after deploying the streamers, it is typically necessary for the vessel to cruise in a straight line for at least three streamer lengths before the streamer distribution approximates to this ideal arrangement and the survey can begin. This increases the time taken to carry out the survey, and therefore increases the cost of the survey. But because of sea currents, the streamers frequently fail to accurately follow the path of the seismic survey vessel, sometimes deviating from this path by an angle, known as the feathering angle, of up to 10°. This can adversely affect the coverage of the survey, frequently requiring that certain parts of the survey be repeated. In really bad circumstances, the streamers can actually become entangled, which though rare, causes great damage and considerable financial loss. Current designs of birds can do nothing to alleviate any of these lateral streamer positioning problems.

It is therefore an object of the present invention to provide novel streamer control devices which alleviate at least some of the disadvantages of the current designs, and/or which possess more functionality than the current designs.

According to the present invention, there is provided a control device for controlling the position of a marine seismic streamer, the device comprising a body mechanically connected in series between two adjacent sections of the streamer, sensor means in the body for determining its angular position in a plane perpendicular to the longitudinal axis of the streamer, two opposed control surfaces projecting outwardly from the body, each control surface being rotatable about an axis which in use extends transversely of the streamer, and control means responsive to control signals and the sensor means for independently adjusting the respective angular positions of said two control surfaces so as to control the lateral position of the streamer as well as its depth.

In a preferred embodiment of the invention, for use with a multi-section streamer which includes an electric power line, the control means is at least partly electrical and arranged in use to receive electric power from said electric power line.

When the streamer also includes a control line, the control means is preferably arranged in use to receive control signals from the control line.

The control means preferably includes at least one electrical motor, and may also include means for sensing the respective angular positions of the two control surfaces.

Conveniently, said two control surfaces rotate about a common axis.

Advantageously, each of the two control surfaces comprises a respective wing-like member which is swept back with respect to the direction of tow of the streamer.

Preferably, said control surfaces are releasably secured to the body, which may be adapted to be non-rotatably coupled to the streamer.

The invention will now be described, by way of example only, with reference to the accompanying drawings, of which:
Figure 1 is a somewhat schematic representation of a preferred embodiment of a streamer control device in accordance with the present invention;
Figure 2 is a simple schematic of a control system forming part of the streamer control device of Figure 1; and
Figures 3 to 5 illustrate the operation of the streamer control device of Figure 1.

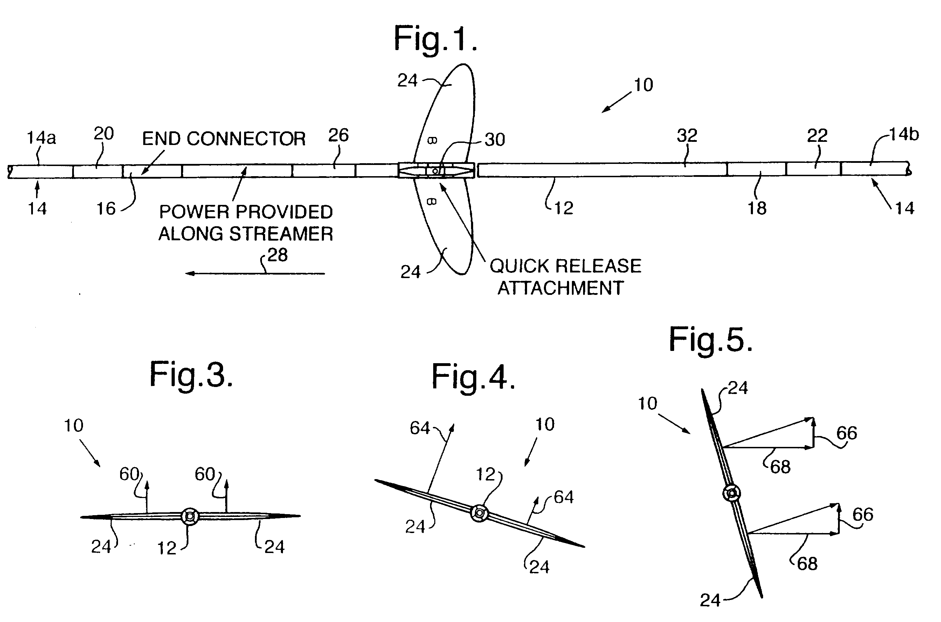

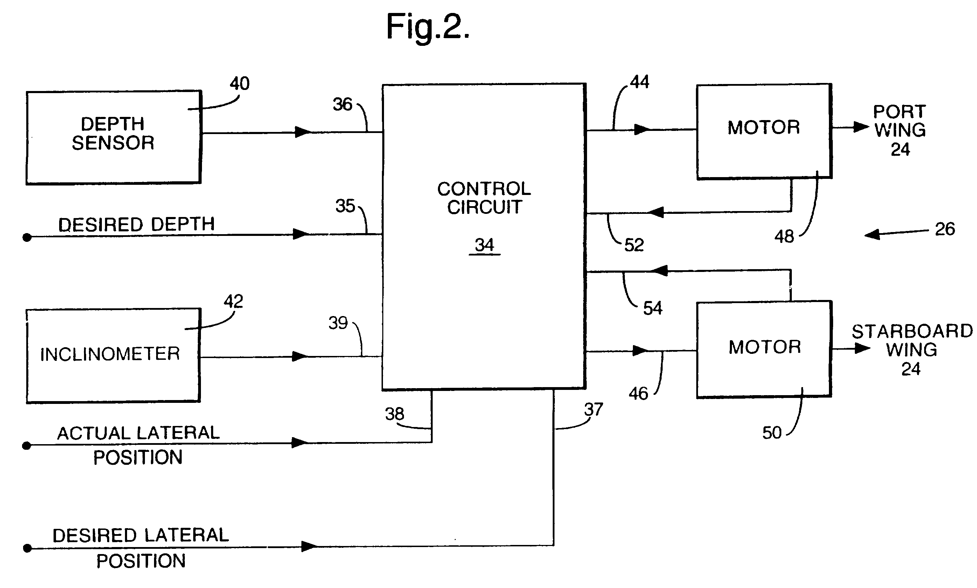

The streamer control device, or "bird", of Figure 1 is indicated generally at 10, and comprises an elongate streamlined body 12 adapted to be mechanically and electrically connected in series in a multi-section marine seismic streamer 14 of the kind which is towed by a seismic survey vessel and which is used, in conjunction with a seismic source also towed by the vessel, to conduct seismic surveys, as briefly described hereinbefore. To permit such connection, each end of the body 12 is provided with a respective mechanical and electrical connector 16, 18, these connectors being complementary to, and designed to interconnect with, streamer end connectors 20, 22 respectively which are normally used to join together adjacent sections 14a and 14b of the streamer 14.

The bird 10 is provided with two opposed control surfaces, or wings, 24, typically moulded from a fibre-reinforced plastics material, which project horizontally outwardly from the body 12 and which are independently rotatable about a common axis extending substantially perpendicularly through the longitudinal axis of the body. Rotation of the wings 24 is effected under the control of a control system 26 sealingly housed within the body 12. The wings 24 are generally ogival (ie rounded) and swept back with respect to the direction of tow of the streamer 14 (which direction is indicated by the arrow 28), in order to reduce the possibility of debris becoming hooked on them. To facilitate their rapid removal and reattachment, the wings 24 are secured to body 12 by a quick-release attachment 30.

As mentioned hereinbefore, the streamer 14 includes hydrophones distributed along its length; it also includes control and conversion circuitry for converting the outputs of the hydrophones into digital data signals, longitudinally extending control and data lines for conducting control and data signals to and from the control and conversion circuitry, and electrical power supply lines for supplying electrical power from the vessel to the circuitry. All these lines are coupled together from the streamer section 14a to the streamer section 14b via respective corresponding lines 32 which extend through the body 12 of the bird 10 between the connectors 16, 18. Additionally, the control system 26 is connected to receive control signals and electric power from respective ones of the lines 32.

The greater part of the length of the body 12 of the bird 10 is flexible, the only rigid parts being the connectors 20, 22, and a short central section which houses the control system 26 and from which the wings 24 project. This central section, which is made of aluminium or titanium and has holes passing longitudinally therethrough for the passage of Kevlar or other stress members which bear the longitudinal loads on the body 12, is kept as short as possible, typically around 40 cm, so that once the wings 24 have been detached from the body 12, the streamer 14 can be wound onto and unwound from the large drum used for storing the streamer, with the body 12 still connected in the streamer. The quick-release attachment 30 permits the removal and attachment of the wings 24 to be at least partly automated as the streamer 14 is reeled in and out during the survey.

The reason for providing the elongate flexible parts of the body 12 is to provide enough length for the inclusion of one or more hydrophones or hydrophone groups, should this be necessary to preserve a desired uniform hydrophone spacing along the length of streamer 14. If no hydrophones need to be included, the flexible parts of the body 12 can be omitted altogether, along with the aforementioned stress members.

The control system 26 is schematically illustrated in Figure 2, and comprises a microprocessor-based control circuit 34 having respective inputs 35 to 39 to receive control signals representative of desired depth, actual depth, desired lateral position, actual lateral position and roll angle of the bird 10 (ie the angular position of the body 12 in a plane perpendicular to the longitudinal axis of the streamer 14). The desired depth signal can be either a fixed signal corresponding to the aforementioned 10 metres, or an adjustable signal, while the actual depth signal is typically produced by a depth sensor 40 mounted in or on the bird 10. The lateral position signals are typically derived from a position determining system of the kind described in our US Patent No 4,992,990 or our International Patent Application No W09621163. The roll angle signal is produced by an inclinometer 42 mounted within the bird 10.

The control circuit 34 has two control outputs 44, 46, connected to control respective electrical stepper motors 48, 50, each of which is drivingly connected to a respective one of the wings 24. The stepper motors 48, 50 have respective outputs at which they produce signals representative of their respective current angular positions (and therefore of the current angular positions of the wings 24), which outputs are connected to respective control inputs 52, 54 of the control circuit 34.

In operation, the control circuit 34 receives between its inputs 35 and 36 a signal indicative of the difference between the actual and desired depths of the bird 10, and receives between its inputs 37 and 38 a signal indicative of the difference between the actual and desired lateral positions of the bird 10. These two difference signals are used by the control circuit 34 to calculate the roll angle of the bird 10 and the respective angular positions of the wings 24 which together will produce the necessary combination of vertical force (upwardly or downwardly) and lateral force (left or right) required to move the bird 10 to the desired depth and lateral position. The control circuit 34 then adjusts each of the wings 24 independently by means of the stepper motors 48, 50, so as to start to achieve the calculated bird roll angle and wing angular positions.

Figures 3 to 5 illustrate the operation of the bird 10 in the case where the streamer 14 is slightly heavy (slightly negative buoyancy), and the bird 10 thus needs to produce lift to maintain the streamer at the desired depth. This lift is produced by the flow of the water over the wings 24 of the bird 10, resulting from the 5 knot towing speed of the streamer 14 through the water, and can be changed by changing the angle of attack of the wings with respect to the flow. The magnitude of the lift required for the situation envisaged by Figure 3 is indicated by the length of the arrows 60.

If the streamer 14 now needs to be moved laterally to the right (as viewed in Figures 3 to 5), the angular position of the left wing 24 of the bird 10 is first adjusted to increase its lift, while the angular position of the right wing is adjusted to decrease its lift, as represented by the length of the arrows 64 in Figure 4, thus causing the bird 10 to roll clockwise from the position shown in Figure 3 to the position shown in Figure 4. This clockwise roll continues until the bird 10 reaches the steady state condition shown in Figure 5, where it can be seen that the vertical component of the lift produced by the wings 24, indicated by the arrows 66, is equal to the lift represented by the arrows 60 of Figure 3 required to maintain the streamer 14 at the desired depth, while the much larger horizontal component, represented by the arrows 68, moves the streamer 14 to the right.

While adjusting the angular positions of the wings 24 of the bird 10, the control circuit 34 continuously receives signals representative of the actual angular positions of the wings from the stepper motors 48, 50, as well as a signal representative of the actual roll angle of the bird from the inclinometer 42, to enable it to determine when the calculated wing angular positions and bird roll angle have been reached. And as the aforementioned difference signals at the inputs 35 to 38 of the control circuit 34 reduce, the control circuit repeatedly recalculates the progressively changing values of the roll angle of the bird 10 and the angular positions of the wings 24 required for the bird and streamer reach the desired depth and lateral position, until the bird and streamer actually reach the desired depth and lateral position.

The body of the bird 10 does not rotate with respect to the streamer 14, and thus twists the streamer as it rolls. The streamer 14 resists this twisting motion, so acting as a kind of torsion spring which tends to return the bird 10 to its normal position (ie with the wings 24 extending horizontally). However, this spring returning action, though beneficial, is not essential, and the bird 10 can if desired be designed to rotate to a certain extent with respect to the axis of the streamer 14.

It will be appreciated that the bird 10 has several important advantages with respect to prior art birds. Its in-line connection in the streamer 14 not only reduces the noise it generates as the streamer is towed through the water, but also enables it to derive power and control signals via the streamer and so obviates the need for batteries (although they may still be provided if desired for back-up purposes). But most importantly, it enables the horizontal or lateral position of the streamer 14 to be controlled, and not just its depth.

Another significant advantage of the bird 10 is that by virtue of the shortness of the stiff parts of the respective body 12 and the easily detachable wings 24, it does not need to be removed from the streamer 14 during winding and unwinding. This saves a considerable amount of time when carrying out the seismic survey.

Many modifications can be made to the bird 10. For example, the wings 24 can be staggered slightly along the length of the body 12, in order to provide slightly more room for their respective drive trains. Additionally, the electric motors 48, 50 can be replaced by hydraulic actuators.

## Claims

1. A control device for controlling the position of a marine seismic streamer, the device (10) comprising a body (12) adapted to be mechanically connected in series between two adjacent sections (14a, 14b) of the streamer (14), and two opposed control surfaces (24) projecting outwardly from the body (10), each control surface being rotatable about an axis which in use extends transversely of the streamer, the device being characterised by sensor means (42) in the body (10) for determining its angular position in a plane perpendicular to the longitudinal axis of the streamer (14), and control means (26) responsive to control signals and the sensor means for independently adjusting the respective angular positions of said two control surfaces so as to control the lateral position of the streamer as well as its depth.

2. A control device as claimed in claim 1, for use with a multi-section streamer (14) which includes an electric power line (13), wherein the control means (26) is at least partly electrical and arranged in use to receive electric power from said electric power line.

3. A control device as claimed in claim 1 or claim 2, for use with a streamer which also includes a control line (32), wherein the control means (26) is arranged in use to receive control signals from the control line.

4. A control device as claimed in any one of claims 1 to 3, wherein said two control surfaces (24) are releasably secured to the body (12).

5. A control device as claimed in claim 4, wherein the body (12) is adapted to be wound onto a streamer drum while still connected in the streamer (14).

6. A control device as claimed in claim 5, wherein the body (12) is at least partly flexible.

7. A control device as claimed in claim 5 or claim 6, wherein the body (12) is of approximately the same diameter as the streamer.

8. A control device as claimed in any preceding claim, wherein said control means (26) includes at least one electrical motor (48 or 50).

9. A control device as claimed in any preceding claim, wherein the control means (26) includes means (48, 50) for sensing the angular position of each of the two control surfaces (24).

10. A control device as claimed in any preceding claim, wherein the two control surfaces (24) rotate about a common axis.

11. A control device as claimed in any preceding claim, wherein each of the two control surfaces (24) comprises a respective wing-like member (24) which is swept back with respect to the direction of tow of the streamer.

12. A control device as claimed in any preceding claim, wherein the body (12) is adapted to be non-rotatably coupled in the streamer (14).

## Patentansprüche

1. Steuervorrichtung zum Steuern der Position eines meeresseismischen Meßkabels, wobei die Vorrichtung (10) einen Körper (12), der so beschaffen ist, daß er zwischen zwei benachbarten Abschnitten (14a, 14b) des Meßkabels (14) mechanisch in Reihe verbunden ist, sowie zwei gegenüberliegende Steueroberflächen (24), die vom Körper (10) nach außen vorstehen, umfaßt, wobei jede Steueroberfläche um eine Achse drehbar ist, die sich im Gebrauch quer zum Meßkabel erstreckt, wobei die Vorrichtung gekennzeichnet ist durch eine Sensoreinrichtung (42) im Körper (10) zum Bestimmen seiner Winkelposition in einer zur Längsachse des Meßkabels (14) senkrechten Ebene und eine Steuereinrichtung (26), die auf Steuersignale und auf die Sensoreinrichtung anspricht, um die jeweiligen Winkelpositionen der beiden Steueroberflächen unabhängig einzustellen, um so sowohl die seitliche Position des Meßkabels als auch seine Tiefe zu steuern.

2. Steuervorrichtung nach Anspruch 1 zur Verwendung in einem Meßkabel (14) mit mehreren Abschnitten, das eine Elektrizitätsleitung (13) enthält, wobei die Steuereinrichtung (26) wenigstens teilweise elektrisch ist und im Gebrauch so beschaffen ist, daß sie elektrischen Strom von der Elektrizitätsleitung empfängt.

3. Steuervorrichtung nach Anspruch 1 oder Anspruch 2 zur Verwendung mit einem Meßkabel, das außerdem eine Steuerleitung (32) enthält, wobei die Steuereinrichtung (26) so beschaffen ist, daß sie im Gebrauch Steuersignale von der Steuerleitung empfängt.

4. Steuervorrichtung nach einem der Ansprüche 1 bis 3, wobei die beiden Steueroberflächen (24) am Körper (12) lösbar befestigt sind.

5. Steuervorrichtung nach Anspruch 4, wobei der Körper (12) so beschaffen ist, daß er auf eine Meßkabel-Trommel gewickelt ist und dabei im Meßkabel (14) verbunden ist.

6. Steuervorrichtung nach Anspruch 5, wobei der Körper (12) wenigstens zum Teil flexibel ist.

7. Steuervorrichtung nach Anspruch 5 oder Anspruch 6, wobei der Körper (12) angenähert den gleichen Durchmesser wie das Meßkabel besitzt.

8. Steuervorrichtung nach einem vorhergehenden Anspruch, wobei die Steuereinrichtung (26) wenigstens einen Elektromotor (48 oder 50) enthält.

9. Steuervorrichtung nach einem vorhergehenden Anspruch, wobei die Steuereinrichtung (26) eine Einrichtung (48, 50) zum Erfassen der Winkelposition jeder der beiden Steueroberflächen (24) enthält.

10. Steuervorrichtung nach einem vorhergehenden Anspruch, wobei sich die beiden Steueroberflächen (24) um eine gemeinsame Achse drehen.

11. Steuervorrichtung nach einem vorhergehenden Anspruch, wobei jede der beiden Steueroberflächen (24) ein jeweiliges flügelähnliches Element (24) umfaßt, das in bezug auf die Schlepprichtung des Meßkabels zurückgebogen ist.

12. Steuervorrichtung nach einem vorhergehenden Anspruch, wobei der Körper (12) so beschaffen ist, daß er im Meßkabel (14) drehfest gekoppelt ist.

## Revendications

1. Dispositif de commande destiné à commander la position d'une flûte sismique marine, le dispositif (10) comprenant un corps (12) adapté pour être relié mécaniquement en série entre deux sections adjacentes (14a, 14b) de la flûte (14), et deux surfaces de commande opposées (24) faisant saillie vers l'extérieur à partir du corps (10), chaque surface de commande pouvant tourner autour d'un axe qui, en service, s'étend transversalement par rapport de la flûte, le dispositif étant caractérisé par des moyens capteurs (42) dans le corps (10) destinés à déterminer sa position angulaire dans un plan perpendiculaire à l'axe longitudinal de la flûte (14) et des moyens de commande (26) sensibles à des signaux de commande et aux moyens capteurs, destinés à ajuster de façon indépendante les positions angulaires respectives desdites deux surfaces de commande de façon à commander la position latérale de la flûte ainsi que sa profondeur.

2. Dispositif de commande selon la revendication 1, destiné à être utilisé avec une flûte à sections multiples (14) qui comprend un câble d'alimentation électrique (13), dans lequel les moyens de commande (26) sont au moins partiellement électriques et sont, en service, agencés de façon à recevoir du courant électrique par ledit câble d'alimentation électrique.

3. Dispositif de commande selon la revendication 1 ou la revendication 2, destiné à être utilisé avec une flûte qui comprend également un câble de commande (32), dans lequel les moyens de commande (26) sont, en service, agencés de façon à recevoir des signaux de commande par le câble de commande.

4. Dispositif de commande selon l'une quelconque des revendications 1 à 3, dans lequel lesdites deux surfaces de commande (24) sont fixés au corps (12) de manière amovible.

5. Dispositif de commande selon la revendication 4, dans lequel le corps (12) est adapté pour être enroulé sur un tambour de flûte tout en restant relié à la flûte (14).

6. Dispositif de commande selon la revendication 5, dans lequel le corps (12) est au moins partiellement flexible.

7. Dispositif de commande selon la revendication 5 ou la revendication 6, dans lequel le corps (12) a approximativement le même diamètre que la flûte.

8. Dispositif de commande selon une quelconque revendication précédente, dans lequel lesdits moyens de commande (26) comprennent au moins un moteur électrique (48 ou 50).

9. Dispositif de commande selon une quelconque revendication précédente, dans lequel les moyens de commande (26) comprennent des moyens (48, 50) destinés à détecter la position angulaire de chacune des deux surfaces de commande (24).

10. Dispositif de commande selon une quelconque revendication précédente, dans lequel les deux surfaces de commande (24) tournent autour d'un axe commun.

11. Dispositif de commande selon une quelconque revendication précédente, dans lequel chacune des deux surfaces de commande (24) comprend un élément en aile respectif (24) qui est déporté vers l'arrière par rapport à la direction de remorquage de la flûte.

12. Dispositif de commande selon une quelconque revendication précédente, dans lequel le corps (12) est adapté pour être raccordé de manière non rotative dans la flûte (14).
